(19) Europäisches Patentamt

European Patent Office

Office européen des brevets

(11)  EP 0 621 314 B1

(12)  FASCICULE DE BREVET EUROPEEN

(45) Date de publication et mention
de la délivrance du brevet:
**16.10.2002 Bulletin 2002/42**

(51) Int Cl.7: **C08L 67/02**, C08L 77/00,
C08L 77/12
// (C08L67/02, 23:08),
(C08L77/00, 23:08)

(21) Numéro de dépôt: **94400800.2**

(22) Date de dépôt: **13.04.1994**

(54) **Elastomères thermoplastiques à motifs polyéthers**

Thermoplastische Elastomere mit Polyethersegmenten

Thermoplastic elastomers with polyether segments

(84) Etats contractants désignés:
**AT BE CH DE DK ES FR GB GR IE IT LI LU NL PT
SE**

(30) Priorité: **21.04.1993 FR 9304678**

(43) Date de publication de la demande:
**26.10.1994 Bulletin 1994/43**

(73) Titulaire: **Atofina
92800 Puteaux (FR)**

(72) Inventeurs:
• **Alex, Patrick
F-91470 Pecqueuse (FR)**
• **Aubert, Yves
F-27300 Menneval (FR)**
• **Frey, Alain
F-27300 St-Leger de Rotes (FR)**

(56) Documents cités:
**EP-A- 0 247 828        EP-A- 0 418 068
EP-A- 0 459 862        FR-A- 2 523 143
US-A- 4 950 717**

• **PATENT ABSTRACTS OF JAPAN vol. 16, no. 413
(C-980)(5456) 1 Septembre 1992 & JP-A-04 142
341 (KOHJIN CO. LTD.)**

**Description**

La présente invention concerne des élastomères thermoplastiques à motifs polyéthers, et plus particulièrement ceux contenant aussi des motifs amide ou polyester. Les copolymères à motifs polyéthers et polyesters sont par exemple ceux vendus sous la marque HYTREL. Quant aux élastomères à motifs polyéther et amides, dans cette famille on trouve soit des élastomères ayant des motifs polyéthers et des motifs amides, oligoamides et polyamides répartis statistiquement, soit des élastomères formés de blocs polyéthers et de blocs polyamides. Le brevet US 4,207,410 décrit la préparation de ces copolymères statistiques par réaction d'un lactame ou d'un alpha oméga amino acide carboxylique avec un polyéther à extrémités OH et un diacide carboxylique. Le brevet US 4,839,441 décrit la préparation de copolymères bloc polyéthers bloc polyamide par réaction d'un polyamide dérivé d'un lactame avec un diacide carboxylique et un polyéther à extrémités OH. La Demanderesse a découvert que selon les conditions de synthèse et la pureté des matières premières, tous ces produits peuvent contenir plus ou moins d'oligomères de polyéther, de polyamide ou de polyester et d'impuretés qui abaissent la viscosité, nuisent à la transparence ou parfois même exsudent. Cette exsudation est d'autant plus importante qu'on moule ces copolymères à chaud.

La demanderesse a découvert qu'on pouvait remédier à tous ces inconvénients en incorporant dans ces élastomères thermoplastiques un polymère ayant des groupes qui vont réagir avec ces oligomères. En piégeant ces produits, on augmente la viscosité, on améliore la transparence et on évite l'exsudation.

On a ainsi abaissé la quantité d'oligomères et d'impuretés pouvant migrer et provoquant l'exsudation. La quantité de ces oligomères et impuretés pouvant migrer (ou libres) peut se mesurer par une extraction à l'éthanol. On les qualifie de « libres » ou « pouvant migrer » par opposition à ceux qui ont été piégés ou fixés dans l'élastomère thermoplastique par réaction avec le polymère qu'on a ajouté dans l'élastomère thermoplastique.

La présente invention est une composition à base d'un élastomère thermoplastique comprenant des séquences polyéthers contenant des oligomères et impuretés et un polymère (B) ayant des groupes qui réagissent avec ces oligomères

- le polymère (B) étant choisi parmi les copolymères éthylène / ester d'acide insaturé / anhydride d'acide dicarboxylique insaturé et les copolymères éthylène / ester d'acide insaturé / monomère glycidylique insaturé
- la quantité du polymère (B) étant d'au plus 10 parties pour 90 parties de l'élastomère thermoplastique
- ladite composition étant telle que par rapport à la composition ne contenant pas (B), elle a une transparence améliorée, une plus forte viscosité et n'exsude plus.

Avantageusement dans cette composition le taux de matières extractibles par l'éthanol selon la norme FDA 1 212 502 est inférieur à 3,5 % du poids de l'élastomère.

Selon une autre forme avantageuse de l'invention, la composition est caractérisée en ce que l'élastomère thermoplastique comprend des blocs polyéthers et des blocs polyamides.

Selon une autre forme avantageuse de l'invention, la composition est caractérisée en ce que l'élastomère thermoplastique comprend des blocs polyéthers et de motifs polyesters.

L'art antérieur JP-A-04142341 décrit des mélanges de polyoléfine, de polyéthylène téréphtalate et d'élastomère polyester-polyéther. On y ajoute des copolymères éthylène-acide acrylique, éthylène-acrylate, éthylène-acrylate acide acrylique, éthylène-acétate de vinyle-méthacrylate de glycidyle ou éthylène-acrylate-anhydride maléique pour en faire des films étirables et perméables à l'air.

L'art antérieur EP 459862 décrit des mélanges de 60 parties de copolymères à blocs polyamides et blocs polyéthers avec 40 parties de copolymères maléisés de l'éthylène et de l'acétate de vinyle. Ces mélanges sont coextrudés avec des polyamides.

L'élastomère thermoplastique peut comprendre des motifs polyéthers et des motifs polyesters. Ce sont par exemple des blocs polyéthers et des blocs polyesters.

Ces produits sont connus sous le nom de polyesters élastomères et sont thermoplastiques.

Les polyéthers sont par exemple du polyéthylène glycol, du polypropylène glycol ou du polytétraméthylène glycol.

La masse molaire $\overline{M}$n de ces polyéthers peut être comprise entre 250 et 6000.

Ces polyéthers se condensent avec au moins un diacide carboxylique pour former les segments souples des polyesters élastomères.

Les blocs polyesters résultent par exemple de la condensation d'au moins un diol avec au moins un diacide carboxylique. Le diol peut être le glycol, le propanediol ou le butanediol. Le diacide peut être l'acide téréphtalique. Ces blocs forment les segments durs du polyester élastomère.

Les segments durs peuvent comprendre plusieurs motifs résultant de l'action d'un diol sur un diacide.

Les segments souples peuvent comprendre plusieurs motifs résultant de l'action du polyéther sur un diacide. Les segments durs et les segments souples sont attachés par des liaisons ester. De tels polyesters élastomères sont

EP 0 621 314 B1

décrits dans les brevets EP 402 883 et EP 405 227.

Les élastomères thermoplastiques à motifs polyéthers peuvent aussi être des copolyétherimides ester. Les segments souples sont formés par la réaction de polyether diamines avec des composés tricarboxyliques ou anhydrides d'acide carboxylique contenant un groupe carboxylique tel que par exemple l'anhydride trimellitique. Les polyéthers diamines utilisés ont une masse molaire moyenne de 600 à 12000. Ces polyetherdiamines peuvent eux mêmes être issus de polyethylèneglycol, polypropylèneglycol ou polytetraméthylèneglycol.

Les blocs polyesters formant les segments dans des copolyetherimides ester résultent par exemple de la condensation d'au moins un diol avec au moins un diacide carboxylique. Le diol peut être le glycol, le propanediol ou le butanediol. Le diacide peut être l'acide terephtalique. De tels copolyetherimides ester sont décrits dans EP 402 883 et EP 405 227.

Quant aux élastomères thermoplastiques qui comprennent des motifs polyéthers et des motifs amides, ils peuvent être répartis de façon statistique ou ordonnée. Les motifs amides peuvent être isolés ou groupés dans des oligomères provenant de la réaction d'une diamine avec un diacide ou de la condensation d'un alpha oméga amino acide carboxylique.

Les élastomères les plus utilisés sont ceux comprenant des blocs polyamides et des blocs polyéthers. Les blocs polyamides peuvent provenir soit de la condensation d'un lactame ou d'un alpha oméga amino acide, soit de la réaction d'un diacide et d'une diamine.

Ces blocs polyamides peuvent être préparés en présence d'un diacide. On obtient des blocs polyamides à extrémités acide carboxylique. La masse molaire $\overline{M}n$ des blocs polyamides peut être entre 600 et 5000.

Les polyéthers sont par exemple du polyéthylène glycol, du polypropylène glycol ou du polytétraméthylène glycol de masse molaire $\overline{M}n$ entre 250 et 6000, plusieurs polyéthers peuvent être enchaînés par exemple par des diacides dans le cas des polyétherdiols.

On ne sortirait pas du cadre de l'invention en utilisant d'autres élastomères à blocs polyamides et à blocs polyéthers. Ces produits peuvent être préparés par réaction de lactame ou alpha oméga amino acide de diacide et de polyétherdiol ou polyétherdiamine. On peut aussi condenser des blocs polyamides à extrémités aminées avec des polyéthers diacides, condenser des blocs polyamides à extrémités acides avec des polyetherdiamines.

Tous ces produits sont décrits dans les brevets US 4,331,786 - 4,115,475 - 4,195,015 - 4,839,441 et 4,864,014.

L'extraction à l'éthanol est selon la norme FDA 1 212 502. La quantité d'extractibles s'exprime en pourcentage du poids de l'élastomère.

La Demanderesse a découvert qu'on pouvait abaisser suffisamment la quantité d'extractibles, c'est-à-dire d'oligomères ou d'impuretés pouvant migrer, pour éviter toute exsudation même au bout de plusieurs mois, même si l'élastomère a été extrudé ou moulé à chaud.

Cette quantité peut varier selon les conditions d'utilisation de l'élastomère. On a trouvé qu'une quantité inférieure à 3,5 % était le plus souvent suffisante.

Pour abaisser la quantité d'extractibles en dessous du seuil où apparaît l'exsudation, il suffit d'incorporer dans l'élastomère thermoplastique le polymère (B) ayant des groupes qui vont réagir avec les oligomères et les impuretés pour les piéger, les empêchant ainsi de migrer.

Le polymère B réagit avec les résidus de la synthèse de l'élastomère thermoplastique. Ces résidus peuvent être des oligomères de polyéther, des impuretés venant des monomères ou leur produit de réaction obtenu pendant la synthèse ou toute combinaison de ces produits. Le polymère B piège ces produits. On évite ainsi dans l'élastomère thermoplastique la présence de produits de basse masse molaire qui sont différents de l'élastomère thermoplastique et en altèrent les propriétés. Par exemple, ils abaissent la viscosité de l'élastomère thermoplastique, diminuent la transparence et lors des transformations avec chauffage, il peut y avoir exsudation.

La Demanderesse a constaté que l'élastomère thermoplastique qui a été traité par incorporation d'une quantité suffisante de polymère B avait une meilleure transparence, une plus forte viscosité et n'exsudait plus.

On incorpore B par les moyens habituels directement dans les proportions recherchées ou à l'aide de masterbatchs.

La quantité de polymère B à incorporer dans l'élastomère thermoplastique est d'au plus 10 parties pour 90 parties de l'élastomère thermoplastique. Une quantité entre 5 et 10 parties convient parfaitement.

Par exemple, le polymère B contient:

(i) des motifs éthylène/ester d'acide insaturé, ledit acide présentant de préférence une insaturation éthylénique adjacente au groupe carboxylique. L'acide insaturé est de préférence un monoacide tel que l'acide acrylique, l'acide méthacrylique, l'acide crotonique ou l'acide cinnamique. Il peut également s'agir d'un diacide tel que l'acide maléique, l'acide fumarique, l'acide citraconique, l'acide glutaconique ou l'acide muconique. Dans le cas des diacides, l'ester d'acide insaturé peut être un mono-ester ou, de préférence un diester. L'alcool duquel dérive l'ester d'acide insaturé comprend de préférence de 1 à 8 atomes de carbone. Le groupe estérifiant peut être linéaire ou ramifié, tel que par exemple méthyle, éthyle, n-propyle, isopropyle, n-butyle, isobutyle, tertiobutyle, isoamyle, n-

3

hexyle, 2-éthylhexyle ou isooctyle, et

(ii) des motifs dérivés

soit d'un anhydre d'acide dicarboxylique insaturé. L'anhydride présent peut être choisi parmi l'anhydre citraconique, l'anhydride itaconique, l'anhydride tétrahydrophtalique et, de préférence, l'anhydride maléique ;

soit d'un monomère glycidylique insaturé. Le monomère glycidylique peut être choisi notamment parmi les méthacrylates et acrylates de glycidyle, l'itaconate de mono- et le diglycidyle, le butènetricarboxylate de mono-, le di-et triglycidyle.

A titre d'exemple de polymères B, on peut citer les copolymères éthylène-ester acrylique-anhydride maléique et les copolymères éthylène-ester acrylique-méthacrylate de glycidyle.

On ne sortirait pas du cadre de l'invention en incorporant aussi dans l'élastomère thermoplastique des charges, pigments, anti UV ...

### *Exemple 1 :*

On réalise un film d'épaisseur 100 à 150 microns obtenu sur les bases du compound d'un polyétheresteramide (Pebax) avec un terpolymère d'éthylène-ester acrylique-anhydride maléique, le rapport en poids des constituants étant de 90/10 (Pebax/terpolymère). En tant que témoin, on réalise dans les mêmes conditions un film avec ce même polyétheramide.

Le polyétheramide utilisé est obtenu par polycondensation de séquences de PA 12, $\alpha$, $\omega$ dicarboxylées de Mn = 2000 et de séquences de PTMG $\alpha$, $\omega$ dihydroxylées de Mn = 2000. Ce polymère est composé de 50 % en poids de PA 12 et 50 % en poids de PTMG.

Ces produits sont vendus sous le nom de PEBAX par la Demanderesse.

Le terpolymère d'éthylène-ester acrylique -anhydride maléique est obtenu par polymérisation caractérisé par un point de fusion de 65° C et une teneur en comonomère de 32 % se répartissant comme suit : 30 % d'ester acrylique et 2 % d'anhydride maléique.

Ce produit est vendu sous le nom de LOTADER par la Demanderesse.

### *Résultats :*

Observation des films après quelques jours d'exposition en salle conditionnée à 23° C.

L'échantillon film témoin présente une très forte exsudation d'oligomères et additifs UV nuisant à l'aspect et modifiant la transparence du film.

Le film compoundé ne présente aucune trace d'exsudation.

Une observation similaire après 2 mois d'exposition, aucune trace d'exsudation n'est constatée sur le film compoundé.

### *Exemple 2 :*

On réalise un film obtenu par compound du même polyétheresteramide mais avec un terpolymère d'éthylène-ester acrylique-méthacrylate de glycidyle, caractérisé par un point de fusion de 63° C et une teneur en comonomère de 32 % se répartissant comme suit : 24 % d'ester acrylique et 8 % de méthacrylate de glycidyle (vendu sous le nom de LOTADER).

### *Résultats :*

L'observation des films après quelques jours d'exposition fournit des résultats équivalents à l'exemple 1.

### *Exemple 3 :*

L'observation de plaques injectées, de dimensions 100 x 100 x 2 mm, des produits compoundés cités en exemples 1 et 2, comparativement au même polyétheresteramide conduit à des résultats identiques concernant l'exsudation ainsi que la transparence.

### *Exemple 4 :*

On fait varier les taux de terpolymère d'éthylène-ester acrylique-anhydride maléique ou éthylène-ester acrylique-méthacrylate de glycidyle dans le rapport de 7-5 et 3 % dans le polyétheresteramide, l'observation de ces films extrudés après quelques jours d'exposition met en évidence l'absence d'exsudation des produits contenant le terpolymère.

### Exemple 5 :

On réalise des plaques injectées de dimensions 100 x 100 x 2 mm des produits suivants :

Produit 1: Compound des polyétheresteramides A + A1 dans un rapport 55/45 (A/A1).
Produit 2 : Compound des polyétheresteramides A + A1 avec le terpolymère d'éthylène-ester acrylique-anydride maléique ; rapport des constituants : 50/40/10 (A/A1 /Terpolymère).
Produit 3 : Compound des polyétheresteramides A + A1 avec le terpolymère d'éthylène-ester acrylique-méthacrylate de glycidyle ; rapport des constituants 50/50/10 (A / A1 / Terpolymère).

Le polyétheresteramide "A" utilisé est obtenu par polycondensation de séquences de PA 12 $\alpha$, $\omega$ dicarboxylées de Mn = 850 et de séquences de PTMG $\alpha$, $\omega$ dihydroxylées de Mn = 2000.
Ce polymère est composé de 30 % en poids de PA 12 et 70 % de polyéther.
Le polyétheresteramide "A1" utilisé est obtenu par polycondensation de séquences de PA 12 $\alpha$, $\omega$ dicarboxylées de Mn = 1000 et de séquences de PTMG $\alpha$, $\omega$ dihydroxylées de Mn = 1000.
Ce polymère est composé de 50 % en poids de PA 12 et 50 % de polyéther.

### Observations :

Les plaques réalisées avec le produit 1 présentent une certaine opalescence ainsi que des zones du flux soulignant une compatibilité relative entre les deux polyétheresteramides.
Ces mêmes plaques échantillons présentent, après une semaine, une légère exsudation en surface.
Par contre, les plaques réalisées avec les produits 2 ou 3 sont parfaitement transparentes, homogènes et ne présentent aucune exsudation.
A noter :

- l'incorporation des "LOTADER" ne modifie pas la teinte et semblerait même diminuer le jaunissement (voir tableau I ci-après) ;
- la transparence est améliorée comme le montre les résultats de transmissions de la lumière (voir résultats tableau I ci-après).

Tableau I

| Produits | 1 | 2 | 3 |
|---|---|---|---|
| Pebax A | 55 | 50 | 50 |
| Pebax A1 | 45 | 40 | 40 |
| Terpolymère E-EA-MAH | -- | 10 | -- |
| Terpolymère E-EA-MAGLY | -- | -- | 10 |
| MFI (Melt index à 235°C, Poids 1 Kg, filière 2 mm, norme ASTM 1238) | 29,5 | 21,5 | 12 |
| Yellow Index | 28,20 | 25,95 | 26,36 |
| Transmission de lumière<br>-400 nm<br>-500 nm<br>-600 nm<br>-700 nm | 13,86<br>38,05<br>53,24<br>63,63 | 16,70<br>59,41<br>64,48<br>69,68 | 16,69<br>59,61<br>64,81<br>70,19 |

### Exemple 6 :

On a préparé un élastomère à séquences polyamide et polyéther par condensation de séquence PA 12 $\alpha$, $\omega$ dicarboxylées de $\overline{M}n$ = 4 000 et de séquences de PTMG $\alpha$, $\omega$ dihydroxylées de $\overline{M}n$ = 1 000. Cet élastomère est composé de 80 % en poids de PA 12 et de 20 % en poids de PTMG. On l'appelle PEBAX dans la suite de cet exemple.

On incorpore dans ce PEBAX différentes quantités des polymères B suivants :

B1 est un terpolymère éthylène-ester acrylique-anhydride maléique de point de fusion 65° C et contenant 30 % d'ester acrylique et 2 % d'anhydride.

B2 est un terpolymère éthylène-ester acrylique-méthacrylate de glycidyle de point de fusion 63° C et contenant 24 % d'ester acrylique et 8 % d'époxyde.

On mesure le taux d'extractibles à l'éthanol. On a opéré 8 heures de reflux, la prise d'essai est d'environ 15 g ; le volume d'éthanol 0,3 l ; la quantité d'extractibles est déterminée par l'extrait sec.

Les résultats sont reportés dans le tableau 2 suivant.

Tableau II

|  | Taux d'extractibles (%) |
|---|---|
| Pebax - Témoin | 5,3 |
| Pebax 90 % + $B_2$ 10 % | 3,0 |
| Pebax 95 % + $B_2$ 5 % | 3,0 |
| Pebax 90 % + $B_1$ 10 % | 2,8 |
| Pebax 95 % + $B_1$ 5 % | 2,8 |

On a effectué des spectres IR sur les extraits éthanoliques.

Les spectres IR ont été obtenus à partir de dépôts sur fenêtre KBr.

Extrait éthanolique PEBAX témoin :

Le spectre IR est caractéristique d'oligomères de PEBAX avec présence entre autres de bandes caractéristiques des vibrations :

| $\nu C = 0$ | Ester vers | 1736 cm-1 |
|---|---|---|
| $\nu C - 0 - C$ | Ether vers | 1110 cm-1 |
| $\nu C = 0$ | Amide 1 | 1645 cm-1 |
| $\nu NH$ | Amide 2 | 1550 cm-1 |
| Présence possible de PTMG libre. | | |

Extrait éthanoliques sur les PEBAX traités par le polymère B

Les spectres IR sont identiques. Outre les bandes observées dans l'extrait du PEBAX, on remarque une petite bande à 3460 cm-1 correspondant à la vibration harmonique 2 $\nu$ c = 0 ester du polymère B (LOTADER). Les extraits sont donc constitués d'oligomères de PEBAX et de LOTADER.

D'autre part, la bande c-0-c ether à 1110 cm-1 est moins intense que dans l'extrait témoin. On peut donc penser que le polyether libre a réagi sur les fonctions anhydrides du LOTADER et devient, de ce fait, moins extractible par l'éthanol.

## Revendications

**1.** Composition à base d'un élastomère thermoplastique comprenant des séquences polyéthers contenant des oligomères et impuretés et un polymère (B) ayant des groupes qui réagissent avec ces oligomères

- le polymère (B) étant choisi parmi les copolymères éthylène / ester d'acide insaturé / anhydride d'acide dicarboxylique insaturé et les copolymères éthylène / ester d'acide insaturé / monomère glycidylique insaturé
- la quantité du polymère (B) étant d'au plus 10 parties pour 90 parties de l'élastomère thermoplastique
- ladite composition étant telle que par rapport à la composition ne contenant pas (B), elle a une transparence améliorée, une plus forte viscosité et n'exsude plus.

**2.** Composition selon la revendication 1 dans laquelle le taux de matières extractibles par l'éthanol selon la norme FDA 1 212 502 est inférieur à 3,5 % du poids de l'élastomère.

**3.** Composition selon l'une des revendications 1 à 2 **caractérisée en ce que** l'élastomère thermoplastique comprend des blocs polyéthers et des blocs polyamides.

**4.** Composition selon l'une des revendications 1 à 2 **caractérisée en ce que** l'élastomère thermoplastique comprend des blocs polyétners et de motifs polyesters.


**Patentansprüche**

**1.** Zusammensetzung auf der Basis eines thermoplastischen Elastomers mit Polyethersequenzen, die Oligomere und Verunreinigungen und ein Polymer (B) enthält, das Gruppen aufweist, die mit den Oligomeren reagieren, wobei

- das Polymer (B) unter den Copolymeren Ethylen/Ester einer ungesättigten Säure/Anhydrid einer ungesättigten Dicarbonsäure und den Copolymeren Ethylen/Ester einer ungesättigten Säure/ungesättigtes Glycidylmonomer ausgewählt ist,
- die Menge des Polymers (B) höchstens 10 Teile auf 90 Teile thermoplastisches Elastomer beträgt, und
- die Zusammensetzung im Vergleich mit einer Zusammensetzung, die (B) nicht enthält, eine bessere Transparenz und eine höhere Viskosität hat und nicht mehr ausschwitzt.

**2.** Zusammensetzung nach Anspruch 1, wobei der Gehalt an nach der Norm FDA 1 212 502 durch Ethanol extrahierbaren Substanzen unter 3,5 Gew.-% des Elastomers liegt.

**3.** Zusammensetzung nach einem der Ansprüche 1 bis 2, **dadurch gekennzeichnet, daß** das thermoplastische Elastomer Polyetherblöcke und Polyamidblöcke enthält.

**4.** Zusammensetzung nach einem der Ansprüche 1 bis 2, **dadurch gekennzeichnet, daß** das thermoplastische Elastomer Polyetherblöcke und Polyestereinheiten enthält.


**Claims**

**1.** Composition based on a thermoplastic elastomer comprising polyether blocks containing oligomers and impurities and a polymer (B) having groups which react with these oligomers,

- polymer (B) being chosen from ethylene/unsaturated acid ester/unsaturated dicarboxylic acid anhydride copolymers and ethylene/unsaturated acid ester/unsaturated glycidyl monomer copolymers,
- the amount of polymer (B) being at most 10 parts per 90 parts of the thermoplastic elastomer, and
- the said composition being such that, compared with the composition not containing (B), it has improved transparency and a higher viscosity and no longer exudes.

**2.** Composition according to Claim 1, in which the content of ethanol extractables according to the FDA 1 212 502 standard is less than 3.5% of the weight of the elastomer.

**3.** Composition according to either of Claims 1 and 2, **characterized in that** the thermoplastic elastomer comprises polyether blocks and polyamide blocks.

**4.** Composition according to either of Claims 1 and 2, **characterized in that** the thermoplastic elastomer comprises polyether blocks and polyester units.